# DEMANDE DE BREVET EUROPEEN

(11) **EP 1 702 888 A1**
(43) Date de publication de la demande: **20.09.2006**
(21) Numéro de dépôt: 06290335.6
(22) Date de dépôt: 28.02.2006
(51) Int. Cl.: C01B 39/48, C01B 37/02, C01B 39/08, B01J 29/035, B01J 29/70

(54) **Solide cristallise COK-7, procécé de préparation et utilisation pour la transformation d'hydrocarbures**

(30) Priorité: 07.03.2005 FR 0502239
(71) Demandeur: Institut Français du Pétrole, 92852 Rueil-Malmaison Cedex (FR)
(72) Inventeur: Hastoy, Gaelle, 94 120 Fontenay sous Bois (FR); Martens, Johan, 3040 Huldenberg (BE); Guillon, Emmanuelle, 69390 Vernaison (FR)

(57) **Abrégé**

L'invention concerne un solide cristallisé, désigné sous l'appellation COK-7, lequel présente un diagramme de diffraction de rayons X particulier. Le dit solide présente une composition chimique exprimée sur une base anhydre, en termes de mole d'oxydes, par la formule XO₂ : m YO₂, X représente un ou plusieurs élément(s) tétravalent(s), Y représente au moins un élément trivalent. L'invention concerne également le procédé de préparation dudit solide et l'utilisation dudit solide pour la transformation d'hydrocarbures.

## Description

### Domaine technique

La présente invention se rapporte à un nouveau solide cristallisé appelé ci-après COK-7 présentant une nouvelle structure cristalline ainsi qu'au procédé de préparation dudit solide. L'invention concerne également l'utilisation de ce nouveau solide pour la transformation des hydrocarbures.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.
Est généralement associé au terme zéolithe, un solide composé de silicium et d'aluminium. Toutefois la structure zéolithique peut être conservée dans un système purement silicique ou dans lequel le silicium est remplacé par du germanium ou dans lequel l'aluminium est remplacé par du bore, gallium ou fer.

Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant:
"Atlas of Zeolites Structure Types", Ch. Baerlocher, W.M. Meier and D.H. Olson, Fifth Revised Edition, 2001, Elsevier.
La zéolithe ZBM-30 ainsi que son procédé de préparation sont décrits dans le brevet EP-A-46504. La zéolithe ZSM-48 ainsi que son procédé de préparation sont décrits dans le brevet EP-B1-0015132. La ZSM-48 est une zéolithe à pores moyens de diamètre légèrement plus grand que pour la ZSM-22. La zéolithe ZSM-48 ne possède pas de structure officielle et appartient à une famille de zéolithes ayant des structures similaires telles la ZBM-30, la EU-2 et la EU-11. Aucun type structural n'est associé à ces zéolithes et les spectres de diffraction des RX (DRX) de ces solides sont comparables selon la littérature et interprétés comme une intercroissance désorganisée de topologies différentes (Studies in surface Science, 33 (1997)).

### Description de l'invention

### Caractéristiques du solide

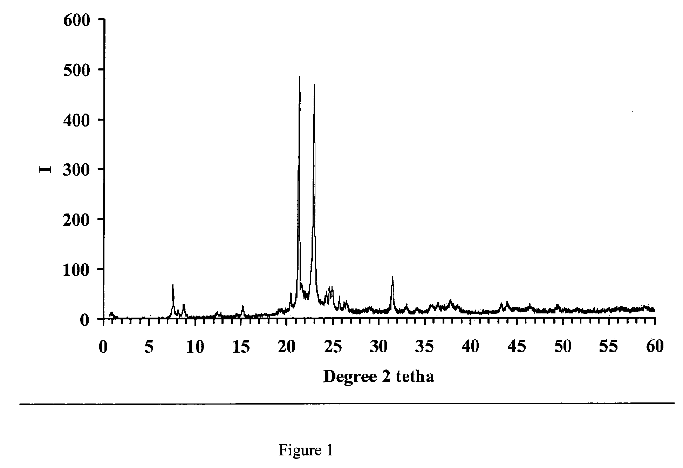

La présente invention se rapporte à un nouveau solide cristallisé, appelé solide cristallisé COK-7, présentant une nouvelle structure cristalline. Ledit solide présente une composition chimique exprimée sur une base anhydre, en termes de mole d'oxydes, définie par la formule générale suivante : XO₂ : m Y₂O₃ dans laquelle X représente un ou plusieurs élément(s) tétravalent(s), Y représente au moins un élément trivalent, m représentant le nombre de mole de Y₂O₃ où m est compris entre 0 et 300.
Le diagramme de diffraction des rayons X du solide cristallisé COK-7 selon l'invention, sous sa forme calcinée est représenté figure 1 et comporte au moins les raies aux valeurs de dₕₖₗ données dans le tableau I. Ce nouveau solide cristallisé COK-7 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 28, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé COK-7 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**Tableau 1 : Valeurs moyennes des dₕₖₗ et intensités relatives mesurées sur un diagramme de diffraction de rayons X du solide cristallisé COK-7 de l'invention**

| dₕₖₗ(Å) | 2 thêta (°) | I/I₀ |
|---|---|---|
| 11.60 | 7.62 | m -FF |
| 10.80 | 8.17 | f -mf |
| 10.02 | 8.82 | f -mf |
| 5.80 | 15.26 | f |
| 4.34 | 20.41 | f |
| 4.17 | 21.25 | FF |
| 3.86 | 23.01 | m -F |
| 2.83 | 31.54 | ff-f |

où FF = très fort ; m = moyen ; f = faible ; F = fort ; mf = moyen faible ; ff = très faible.

L'intensité relative I/I₀ est donnée en rapport à une échelle d'intensité relative où il est attribué une valeur de 100 à la raie la plus intense du diagramme de diffraction des rayons X : ff <15 ; 15≤f<30 ; 30≤mf<50 ; 50≤m<65 ; 65≤F<85 ; FF≥85.

Conformément à l'invention, X est préférentiellement choisi parmi le silicium, l'étain et le titane, de manière très préférée le silicium et Y est préférentiellement choisi parmi l'aluminium, le bore, le fer, l'indium et le gallium, de manière très préférée l'aluminium.

Selon un premier mode de réalisation de l'invention, X est le silicium et Y est l'aluminium : le solide cristallisé COK-7 selon l'invention est alors un aluminosilicate cristallisé présentant un diagramme de diffraction des rayons X identique à celui décrit dans le tableau 1.
Le solide COK-7 possède alors généralement des caractéristiques particulières, à savoir un indice de contrainte modifié CI° compris entre 1,6 et 2,2, de manière préférée compris entre 1,7 et 2,1.
La mesure de ces critères de tamis moléculaires utilise le "decane test" dont la procédure est décrite par J.A.Martens , M.Tielen, P.A.Jacobs et J.Weikamp, Zeolites 1984, 4, 98.
CI° correspond au rapport des isomères 2- methylC9 sur 5-méthylC9 à 5% d'isomérisation du n-décane.

Selon un deuxième mode de réalisation de l'invention, X est le silicium et le solide cristallisé COK-7 selon l'invention est alors un solide purement silicique présentant un diagramme de diffraction des rayons X identique à celui décrit dans le tableau 1.

Dans le cas où le solide cristallisé COK-7 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide COK-7 comporte un structurant organique azoté tel que celui décrit ci-après ou ses produits de décomposition, ou encore ses précurseurs.

Selon l'invention, R est un structurant de la famille des amines. De manière préférée, les structurants amines utilisés selon l'invention comprennent les alkylamines, alkyldiamines, alkyltriamines, alkyltétramines, pyrrolidine, piperazine, aminopipérazine, alkylpentamine, alkylhexamine et leurs dérivés.
De préférence, le structurant organique comporte de 1 à 20 atomes de carbone.
Le structurant peut être éliminé par les voies classiques de l'état de la technique comme des traitements thermiques et/ou chimiques.

Le solide cristallisé COK-7 selon l'invention est de préférence un solide zéolithique.

### Procédé de préparation

L'invention concerne également un procédé de préparation du solide cristallisé COK-7 dans lequel on fait réagir un mélange aqueux comportant au moins une source d'au moins un oxyde XO₂, éventuellement au moins une source de l'oxyde Y₂O₃ et au moins un structurant organique azoté R, le mélange présentant préférentiellement la composition molaire suivante :
mXO₂ : n Y₂O₃ : p H₂O : q R
   - m = 100
   - n entre 0 et 10
   - p entre 0 et 160
   - q entre 0,05 et 20
où X est un ou plusieurs élément(s) tétravalent(s), de préférence le silicium, Y est un ou plusieurs élément(s) trivalent(s) choisi(s) dans le groupe formé par les éléments suivants :
aluminium, fer, bore, indium et gallium, de préférence l'aluminium.

De préférence, aucun métal alcalin n'est introduit lors de la synthèse.

Conformément au procédé selon l'invention, R est un structurant organique azoté, généralement de la famille des amines. De manière préférée, les structurants amines utilisés selon l'invention comprennent les alkylamines, alkyldiamines, alkyltriamines, alkyltétramines, pyrrolidine, piperazine, aminopipérazine, alkylpentamine, alkylhexamine et leurs dérivés. Il sont utilisés seuls ou en mélange.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX.
La source de l'élément Y peut être tout composé comprenant l'élément Y et pouvant libérer cet élément en solution aqueuse sous forme réactive. Dans le cas préféré où Y est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Le procédé selon l'invention consiste donc à préparer un mélange réactionnel aqueux appelé gel et renfermant au moins une source d'au moins un oxyde XO₂, éventuellement au moins une source de l'oxyde Y₂O₃ et au moins un structurant organique azoté R.

Ce gel est avantageusement mis sous conditions hydrothermales sous une pression de réaction autogène, éventuellement en ajoutant du gaz, par exemple de l'azote, à une température comprise entre 100°C et 200°C, de préférence entre 140°C et 180°C, jusqu'à la formation des cristaux de solide COK-7 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé COK-7 au détriment d'impuretés.
De tels germes comprennent des solides cristallisés, de préférence des cristaux de solide COK-7.
Les germes cristallins sont généralement ajoutés dans une proportion comprise entre 0,01 et 10 % du poids de l'oxyde XO₂ (de préférence la silice), utilisé dans le mélange réactionnel.

De manière préférée, après cristallisation, l'autoclave est refroidi par trempe dans de l'eau froide, à une température comprsie entre 0 et 15°C, pour une durée comprise entre 10 minutes et 4heures.

La phase solide est ensuite filtrée et lavée; elle est ensuite prête pour des étapes ultérieures telles que le séchage, la déshydratation et la calcination et/ou l'échange d'ions. Pour ces étapes, toutes les méthodes conventionnelles connues de l'homme du métier peuvent être employées.

De préférence, le produit obtenu à l'étape de cristallisation est soumis à au moins une des étapes suivantes :
- une étape de séparation du solide du mélange de cristallisation,
- une étape de lavage du solide, et
- une étape de séchage dudit solide.

Le solide cristallisé est généralement séparé du mélange par toute méthode connue de l'homme de l'art telle que la filtration. Le solide est ensuite lavé à l'eau, de préférence de l'eau dé-ionisée ou au THF (tétrahydrofurane).

L'étape de séchage est généralement réalisée à une température comprise entre 50 et 150°C pendant une durée allant de 12 à 30 heures.

Le séchage est réalisé à pression atmosphérique de préférence, mais peut être effectué sous pression.

Une étape de calcination à l'issue de la synthèse permet de révéler la porosité du solide zéolithique par décomposition du structurant organique. Cette étape de calcination peut être avantageusement réalisée sous air ou oxygène pur (ou milieu oxydant), à une température comprise entre 300 et 800°C.

Le procédé de synthèse précédemment décrit est réalisé selon deux modes préférés selon l'invention:
1 -Pour la synthèse du solide purement silicique, selon un mode de réalisation préféré du procédé selon l'invention, on fait réagir un mélange aqueux comportant une source de silicium et au moins une diamine, de préférence l'hexamethylenediamine.
2- Pour la synthèse du solide alumino-silicique, selon un mode de réalisation préféré du procédé selon l'invention, on fait réagir un mélange aqueux comportant une source de silicium, une source d'aluminium et au moins une amine, de préférence le triethylènetétramine, en présence d'eau. Après homogénéisation du gel primaire, des germes de COK-7 sont ajoutés. Les germes cristallins sont généralement ajoutés dans une proportion comprise entre 0,01 et 10 % du poids de l'oxyde XO2, de préférence de la silice, utilisé dans le mélange réactionnel.

On peut aussi, selon une variante de ce mode de réalisation préféré du procédé selon l'invention, faire réagir un mélange aqueux comportant une source de silicium, une source d'aluminium et un mélange d'au moins deux amines, de préférence un mélange de triethylenetétramine et d'hexylamine. La proportion d'une amine par rapport à l'autre varie de 10 à 90% poids.

Dans le cas du solide aluminosilicique, de manière préférée, le solide final possède un ratio atomique Silicium sur aluminium compris entre 10 et 300, de manière très préférée entre 30 et 100.

Le solide selon l'invention ou le solide préparé par le procédé selon l'invention peut être utilisé comme catalyseur ou support de catalyseur pour des transformations d'hydrocarbures en raffinage et pétrochimie et tout particulièrement pour les réactions d'hydroisomérisation ou déparaffinage catalytique.

L'invention est illustrée au moyen des exemples suivants.

### Exemple 1. Synthèse de COK-7 purement silicique

18 g de Ludox AS40 (DuPont) sont dissous dans 31 ml d'eau. 1.94g de KOH (Riedel-Haën) dilué dans 6.75 ml d'eau sont ajoutés à 4.17 g of diaminohexane (Acros Organics) et 37.5 ml d'eau. Les deux solutions ainsi préparées sont mélangées sous agitation.

Le gel résultant a pour composition:

H2O/SiO2 = 40; KOH/SiO2 = 0.29; diaminohexane/SiO2 = 0.30.

Il est placé dans un autoclave agité à 150°C pendant 2,5 jours. Après cristallisation, le solide est filtré, lavé, séché à 60°C puis calciné sous azote à 400°C pendant 5 heures, puis sous oxygène à 550°C pendant 15h.

### Exemple 2. Synthèse de COK-7 silicoaluminique

46.15 g de triethylenetétramine (Acros 60% purity) est ajouté à 46.15 g d'eau. Ensuite est ajouté à cette solution 7.69 g of aerosil (UCB 380 glm²)sous agitation, suivie par l'addition de 0.17 g de Al(OH)₃ (Merck).
La composition du gel est:

H2O/SiO2 = 20; triéthylènetétramine/SiO2 = 2,46; A1203/SiO2 = 0.0084.

Quand le gel est homogène,0,66 g de germes de COK-7 silicique calciné sont ajoutés.
Le gel final résultant est placé dans un autoclave à 170 °C pendant 88 heures sous agitation.
Après 88h, l'autoclave est plongé dans de l'eau froide (10°C) pendant1h30.
Le solide est filtré, séché à 60°C et calciné sous oxygène à 550°C pendant 15h.

### Exemple 3. Synthèse de COK-7 silicoaluminique

Une solution de 46.155 g triethylenetetramine (Acros 96%) diluée dans 46.155 g of H₂O est préparée. 7.69 g d'aerosil (UCB 380 g/m²) y est ajouté sous agitation continue, puis 23.08 g d'hexylamine (Aldrich 98%) et 0.165 g de Al(OH)₃ (Merck) sont ajoutés.

Le gel est placé dans un autoclave à 170°C pendant 7 jours sous agitation. L'autoclave est ensuite plongé dans de l'eau froide (10°C) pendant1h30.
Le solide est filtré, lavé à l'eau et THF, séché à 60°C et calciné sous azote à 400°C 5h, puis sous oxygène à 550°C pendant 15h.

### Exemple 4. Comparaison des caractéristiques obtenues selon le decane test

Le solide COK-7 est obtenu selon la procédure décrite dans l'exemple 2. Le solide obtenu COK-7 est soumis à un échange ionique dans une solution de NH₄Cl, 0.5N, à environ 100°C pendant 5 heures sous reflux.
La zéolithe ZSM-48 est obtenue selon le mode opératoire décrit dans le volume 33 pages 282-284 de la série Studies in Surface Science and Catalysis*.* La zéolithe est ensuite soumise à une calcination sous flux d'air sec durant 12 heures à 550°C de manière à éliminer le structurant organique utilisé pour sa synthèse. La zéolithe ZSM-48 brute de synthèse est soumise à une calcination à 550°C sous flux d'air sec durant 12 heures. Le solide ZSM-48 obtenu est soumis à 4 échanges ioniques successifs dans une solution de NH4NO₃, 10N, à environ 100 °C pendant 4 heures pour chaque échange.
La zéolithe ZBM-30 est synthétisée selon le brevet BASF EP-A-46504 avec le structurant organique triéthylènetétramine. La zéolithe ZBM-30 brute de synthèse est soumise à une calcination à 550 °C sous flux d'air sec durant 12 heures.

| Decane test | COK-7 | ZSM-48 | ZBM-30 |
|---|---|---|---|
| CI° | 1.7 | 2.4 *(*Martens et al., Zeolites, 1984, vol 4, 98-107*) 5.2 (*Jacobs et al., Pure Appl. Chem., 1986, vol. 589, No 10, 1329-1338*)* | 2.3 |

## Revendications

1. Nouveau solide cristallisé COK-7 de composition chimique exprimée sur une base anhydre, en termes de mole d'oxydes, définie par la formule générale suivante : XO2 : m Y2O3 dans laquelle X représente un ou plusieurs élément(s) tétravalent(s) choisi parmi le silicium, l'étain et le titane, Y représente au moins un élément trivalent choisi parmi l'aluminium, le bore, le fer, l'indium et le gallium, m représentant le nombre de mole de Y2O3 où m est compris entre 0 et 300, ledit solide présentant un diagramme de diffraction des rayons X sous sa forme calcinée comportant au moins les raies suivantes aux valeurs de dhkl
| dₕₖₗ (Å) | 2 thêta (°) | I/I₀ |
|---|---|---|
| 11.60 | 7.62 | m -FF |
| 10.80 | 8.17 | f -mf |
| 10.02 | 8.82 | f -mf |
| 5.80 | 15.26 | f |
| 4.34 | 20.41 | f |
| 4.17 | 21.25 | FF |
| 3.86 | 23.01 | m -F |
| 2.83 | 31.54 | ff-f |
où FF = très fort ; m = moyen ; f = faible ; F = fort ; mf = moyen faible ; ff = très faible.

2. Solide aluminosilicate cristallisé COK-7 selon la revendication 1 dans lequel X est le silicium et Y est l'aluminium.

3. Solide aluminosilicate cristallisé COK-7 selon la revendication 2 qui présente un indice de contrainte modifié CI° entre 1,6 et 2,2 où CI° correspond au rapport des isomères 2-methylC9 sur 5-méthylC9 à 5% d'isomérisation du n-décane.

4. Solide silicique cristallisé COK-7 selon l'une des revendications 1 à 2 dans lequel X est le silicium.

5. Solide cristallisé COK-7 selon l'une des revendications précédentes qui, sous sa forme brute de synthèse, comporte un structurant organique azoté R ou ses produits de décomposition ou encore ses précurseurs.

6. Solide cristallisé COK-7 selon la revendication 5 dans lequel le structurant organique R comporte de 1 à 20 atomes de carbone.

7. Solide cristallisé COK-7 selon l'une des revendications 5 à 6 dans lequel R est un structurant de la famille des amines.

8. Solide cristallisé COK-7 selon la revendication 7 dans lequel R est choisi parmi les alkylamines, alkyldiamines, alkyltriamines, alkyltétramines, pyrrolidine, piperazine, aminopipérazine, alkylpentamine, alkylhexamine et leurs dérivés.

9. Solide cristallisé COK-7 selon l'une des revendications précédentes qui est un solide zéolithique.

10. Procédé de préparation du solide cristallisé COK-7 dans lequel on fait réagir un mélange aqueux comportant au moins une source d'au moins un oxyde XO₂, éventuellement au moins une source de l'oxyde Y2O3 et au moins un structurant organique azoté R, le mélange présentant préférentiellement la composition molaire suivante : mXO2 : n Y2O3 : p H2O:q R
m = 100
n entre 0 et 10
p entre 0 et 160
q entre 0,05 et 20
où X est un ou plusieurs élément(s) tétravalent(s) choisi parmi le silicium, l'étain et le titane, Y est un ou plusieurs élément(s) trivalent(s) choisi(s) dans le groupe formé par les éléments suivants : aluminium, fer, bore, indium et gallium.

11. Procédé de préparation selon la revendication 10 dans lequel X est le silicium et Y l'aluminium.

12. Procédé selon l'une des revendications 10 à 11 dans lequel le structurant organique azoté R est choisi dans la famille des amines.

13. Procédé selon la revendication 12 dans lequel le structurant organique azoté R est choisi parmi les alkylamines, alkyldiamines, alkylatriamines, alkylatétramines, pyrrolidine, piperazine, aminopipérazine, alkylpentamine, alkylhexamine et leurs dérivés.

14. Procédé de préparation selon l'une des revendications 10 à 13 dans lequel le gel est mis sous conditions hydrothermales sous une pression de réaction autogène, éventuellement en ajoutant du gaz, à une température comprise entre 100°C et 200°C jusqu'à la formation des cristaux de solide COK-7, sous agitation ou en absence d'agitation.

15. Procédé selon l'une des revendications 10 à 14 dans lequel on ajoute au mélange réactionnel des germes comprenant des solides cristallisés.

16. Procédé selon la revendication 15 dans lequel les solides cristallisés sont des cristaux de solide COK-7.

17. Procédé selon l'une des revendications 15 à 16 dans lequel les germes cristallins sont ajoutés dans une proportion comprise entre 0,01 et 10 % du poids de l'oxyde XO2, utilisé dans le mélange réactionnel.

18. Procédé selon l'une des revendications 10 à 17 dans lequel après cristallisation, l'autoclave est refroidi par trempe dans de l'eau froide, à une température comprise entre 0 et 15°C, pour une durée comprise entre 10 minutes et 4heures.

19. Procédé selon l'une des revendications 10 à 18 dans lequel le produit obtenu à l'étape de cristallisation est soumis à au moins une des étapes suivantes :
- une étape de séparation du solide du mélange de cristallisation,
- une étape de lavage du solide, et
- une étape de séchage dudit solide.

20. Procédé selon l'une des revendications 10 à 19 dans lequel le solide est soumis à une étape de calcination à l'issue de la synthèse.

21. Procédé selon la revendication 20 dans lequel l'étape de calcination est réalisée sous air ou oxygène pur (ou milieu oxydant), à une température comprise entre 300 et 800°C.

22. Procédé selon l'une des revendications 10 à 21 dans lequel on fait réagir un mélange aqueux comportant une source de silicium et au moins une diamine.

23. Procédé selon la revendication 22 dans lequel la diamine est l'hexamethylenediamine.

24. Procédé selon l'une des revendications 10 à 21 dans lequel on fait réagir un mélange aqueux comportant une source de silicium, une source d'aluminium et au moins une amine, en présence d'eau.

25. Procédé selon la revendication 24 dans lequel l'amine est la triéthylènetétramine.

26. Procédé selon la revendication 24 comprenant un mélange de triethylènetétramine et d'hexylamine.

27. Utilisation du solide selon les revendications 1 à 9 ou du solide préparé selon le procédé des revendications 10 à 26 pour la transformation d'hydrocarbures en raffinage et pétrochimie.

28. Utilisation selon la revendication 27 pour l'hydroisomérisation des hydrocarbures.

29. Utilisation selon la revendication 27 pour le déparaffinage catalytique des hydrocarbures.
